# EUROPEAN PATENT SPECIFICATION

(11) **EP 1 558 510 B1**
(45) Date of publication and mention of the grant of the patent: **26.07.2006**
(21) Application number: 03757746.7
(22) Date of filing: 28.10.2003
(51) Int. Cl.: B65G 47/52, A22C 15/00

(54) **APPARATUS AND METHOD FOR THE DELIVERY OF ITEMS TO A RECEPTION AREA**
VORRICHTUNG UND VERFAHREN ZUR ZUFÜHRUNG VON GEGENSTÄNDEN ZU EINEM EMPFANGSBEREICH
DISPOSITIF ET PROCEDE POUR L'ACHEMINEMENT D'ARTICLES VERS UNE ZONE DE RECEPTION

(30) Priority: 31.10.2002 DK 200201657
(43) Date of publication of application: 03.08.2005
(73) Proprietor: Slagteriernes Forskningsinstitut, 4000 Roskilde (DK)
(72) Inventor: IVERSEN, Thomas, Peter, DK-2630 Taastrup (DK)
(74) Representative: Elsworth, Dominic Stephen
(86) International application number: PCT/DK2003/000727
(87) International publication number: WO 2004/039708

(56) References cited:
- DK-B1- 173 832
- PATENT ABSTRACTS OF JAPAN vol. 8, no. 164 28 July 1984 & JP 59 057 820 A (CITIZEN WATCH CO. LTD.) 03 April 1984

## Description

The present invention relates to an apparatus and a method for the delivery of items to a reception area by means of a conveyor with an upstream end for reception of the items, a conveyor belt for successive conveyance of the items and a downstream end for delivery of the items. The apparatus and method can, for example, be used to suspend pieces of meat from the hooks of a transport element that is held at the downstream end of the conveyor.

To facilitate the internal and external conveyance of fore ends, middles, hams, etc., meat processing plants suspend these pieces of meat from so-called Christmas trees. A Christmas tree comprises a vertical iron bar which has an upper hook at the top end for suspending the Christmas tree from a sliding bar and which, in each of 4-5 levels, has four upward-directed hooks that extend out from the bar.

JP 590 57820 describes a conveyor system for loading a magazine with glass plates for a liquid crystal display cell.

DK 173.832 B1 (Slagteriernes Forskaingsinstitut) describes of a method and an apparatus for suspending pieces of meat from the hooks of a Christmas tree. A conveyor belt conveys a piece of meat towards the Christmas tree, which is held at the downstream end of the conveyor with the suspension hook at a level below the conveyor. The piece of meat is conveyed in over the hook, after which it is knocked or pressed down onto the hook. After the piece of meat has thus been placed on the hook, it can be difficult to get the piece of meat to leave the belt so that the next hook can receive a piece of meat from the conveyor belt. This is true in particular when the conveyor belt is to be placed close to the hook.

In one embodiment this problem has been solved by the conveyor being designed with a telescopic movable front that, when a slide with the conveyor's front roller and an underlying tightening roller is pushed away from the Christmas tree, removes the belt under the impaled piece of meat so that it is released from the conveyor. One disadvantage of this embodiment is that the slide has to be moved at relatively high speed and it takes a relatively long time before the next piece of meat can be placed on a new hook on the Christmas tree as the belt has to travel some distance before this piece of meat reaches the front of the conveyor.

The object of the present invention is to provide an improved apparatus for the delivery of items from a conveyor to a reception area, for instance an apparatus for the suspension of pieces of meat from a Christmas tree from a belt conveyor that conveys the pieces of meat at high frequency for example more than 1000 pieces of meat per hour.

The object is achieved with the apparatus according to the invention as specified in Claim 1.

By displacing the conveyor and not just a telescopic movable front towards and away from the reception area, it is possible to deliver the items to the area at high frequency as the items to be delivered are moved towards the reception area at the total speed of the belt and conveyor and as the items can be placed close behind each other on the belt without any significant distance between them so an item is rapidly ready to be delivered to the reception area.

In the prior art system according to DK 173.832 B1, with a telescopic movable front of the conveyor, the item is moved towards the reception area at a speed that is only the speed of the belt and it is necessary to keep a good distance between the items on the belt, which results in a slower process. In the apparatus according to the present invention, the propulsion of the belt in the conveyor and the displacement of the conveyor in the direction towards the reception area can take place independently of each other, which also allows for individual control for optimisation of the delivery process.

In the apparatus according to the invention, the conveyor can therefore be displaced without affecting the relative speed of the belt in the front/downstream end of the conveyor, thus avoiding the problems associated with a telescopic moving front roller in the prior art system. In the apparatus according to the invention, the belt's forward speed in the downstream end of the conveyor is thus mainly equal to the belt's return speed at the same location during the displacement of the conveyor.

Preferably, the displacement arrangement comprises a crank mechanism to displace the conveyor in the direction towards and away from the reception area at a speed that depends on the angular position of the rotating part of the mechanism. It has been shown that the combination of the conveyor, which is moved as a whole, and the crank mechanism, which causes the movement, is especially advantageous because a high capacity is achieved at a relatively low belt speed as the crank mechanism minimises the accelerations of items on the conveyor.

The displacement arrangement comprises preferably a movable part that carries the conveyor, a stationary part with guiding means for the movable part and a drive unit to displace the movable part in relation to the stationary part guided by the guiding means.

The drive unit can comprise a motor with an arm fixed to the rotating shaft of the motor and a connection piece that is hinged to the arm wherein the motor is mounted stationary and the free end of the connection piece is connected to the displaceable conveyor or wherein the motor and the conveyor are firmly connected to each other and the free end of the connection piece is fixed to the stationary part.

The connection piece can be fixed to the arm at different distances from the rotating shaft and the limit of the displacement of the conveyor towards the reception area can be adjustable, one of the following being adjustable: the position of the motor shaft, the length of the connection piece and the fixing point of the connection piece on the free end of the arm.

The drive unit can, for example, be fixed to the stationary part in one of several possible positions so that the conveyor can be preset to have a desired distance from the reception area in the conveyor's foremost displacement position.

During operation, the conveyor can be displaced at a speed that mainly follows a sine curve from the moment at which the conveyor's front edge is in a rearmost displacement position furthest from the reception area until the edge is in a foremost displacement position closest to the reception area and back to the displacement position furthest from the reception area. The crank mechanism mentioned above can be used for this purpose, whereby the rotating part rotates at a mainly constant speed.

Sudden or jerky movements of the conveyor are avoided by using a design that produces a sinusoidal speed curve for the conveyor. These could otherwise cause displacements of the items on the belt surface and result in inaccurate delivery of the items to the reception area. Moreover, the items will be located opposite the reception area for a relatively long time so there is time to bring about a fixation of the items there.

The apparatus according to the invention can comprise a control unit to control and vary the speed of the belt in the conveyor and/or the speed of the conveyor in the direction towards and away from the reception area, for example in order to avoid slippage of cuts on the belt or in connection with delivery to the belt at the upstream end or to shorten or lengthen pre-selected process phases. The control unit can comprise a detector to detect an item on the conveyor belt. In these embodiments, the delivery of items to the reception area can be synchronised with the movement of the conveyor/belt so that the items are delivered to the reception area at the right moment.

The apparatus according to the present invention can comprise a supply conveyor that supplies items to the upstream end of the delivery conveyor. In this way, it is possible to provide full or semi automation of the functioning of the apparatus. The supply conveyor can receive the items from a buffer store, a sorting system, a production area or similar.

In a special, preferred embodiment, a second conveyor is arranged at the upstream end of the first conveyor which second conveyor has a conveyor belt that runs over rollers, of which a downstream roller is linked up with the first conveyor to follow its displacement movement, while an upstream roller of the second conveyor is stationary. In this way, items can be transferred to the first conveyor without the items being displaced when transferred from one belt to the next as the first and second conveyors are adjacent at all times. The telescopic conveyor preferably comprises a tightening roller for the belt.

The apparatus according to the invention is used preferably for suspending pieces of meat from hooks on a transport element and, in this embodiment, it is characterised in that the hooks constitute the reception area and that securing means is provided to hold the transport element at the downstream end of the conveyor.

The downstream end of the conveyor can, for example in a fully automated embodiment of the apparatus, be displaced or tipped down from an upper position, where the belt is at an upper level during forward travel, preferably at a level above the tip of the hook, to a lower position, where the belt is at a lower level below the tip of the hook during forward travel.

The displacement or tipping can be activated by a detector, which triggers a signal when the downstream end of the conveyor is close to the transport element.

At the downstream end, the conveyor can have one or more holding devices for the piece of meat to be suspended and these devices can, if necessary, be designed to open after the piece of meat has been knocked or pressed down onto the hook on the transport element.

The method according to the present invention is characterised in that the conveyor is displaced in the direction towards the reception area to a foremost position, that an item conveyed by the conveyor belt is brought partially out over the conveyor's front edge and obtain support on or is held by the reception area and that the conveyor subsequently is displaced away from the reception area to a rearmost position, whereby the item loses the support on by the belt and is delivered to the reception area.

The displacement of the conveyor towards the reception area and return of the conveyor to the rearmost position can be carried out without interruption.

The displacement of the conveyor towards and away from the reception area can be carried out by means of a crank mechanism at a speed that depends on the angular position of the rotating part of the mechanism.

The conveyor can be displaced at a speed that mainly follows a sine curve from the moment at which the conveyor's front edge is in a rearmost displacement position furthest from the reception area until the edge is in a foremost displacement position closest to the reception area and back to the displacement position furthest from the reception area.

According to one embodiment, the speed of the belt in the conveyor and/or the speed of the conveyor in the direction towards and away from the reception area is controlled and varied.

The items can be supplied to the upstream end of the conveyor by means of a second conveyor with a conveyor belt that runs over rollers, of which a downstream roller is linked up with the first conveyor to follow its displacement movement, while an upstream roller of the second conveyor is stationary.

Preferably, the method according to the invention is used for suspending pieces of meat from hooks on a transport element and, in this embodiment, it is characterised in that the hook constitutes the reception area, that the transport element is held at the downstream end of the conveyor by means of securing devices, that the conveyor is displaced to a front position next to a hook on the element and that the piece of meat is pressed or knocked onto the hook after part of it has been brought out over the front edge of the conveyor.

The downstream end of the conveyor can be displaced or tipped down from an upper position, where the belt is at an upper level during forward travel, preferably at a level above the tip of the hook, after the conveyor has been displaced to its front position next to a hook on the transport element and part of the piece of meat has been brought out over the front edge of the conveyor by the forward travel of the belt and is opposite the hook, to a lower position, where the belt is at a lower level below the tip of the hook during forward travel.

The displacement or tipping can be started automatically when the downstream end of the conveyor belt is in a position close to the transport element.

A preferred embodiment of the method according to the invention is characterised in that the piece of meat is held down on the surface of the belt by means of a holding device at the downstream end of the conveyor during the displacement or tipping of the downstream end towards a lower position so that the piece of meat is knocked or pressed down onto the hook and that the holding device, if needed, releases any hold on the piece of meat after it has been knocked or pressed onto the hook.

The apparatus and method according to the invention can be used within different areas. One of these is the delivery of items that are conveyed on a conveyor belt to boxes in which several units are to be packed or transported, whereby the units are delivered successively to the box each time the conveyor is returned to the displacement position furthest from the box. In this way, pieces of meat in the form of, for example, loins can automatically be delivered to a plastic box for collection for subsequent transport of the box to processing locations in a meat processing plant.

The apparatus and method according to the invention can also be used to stack items on a base or a carrying element, whereby the conveyor is raised as a whole or at the downstream end as the stacking progresses.

Preferably, the apparatus and method according to the invention are used for suspending pieces of meat from hooks on transport elements as the delivery speed is high and the pieces of meat can be moved without them slipping on the belt so that the desired positioning above a hook is brought about fast and reliably.

The invention will be explained in further detail in the following with reference to the drawings, in which
- fig. 1 shows a semi automatic apparatus according to the invention for suspending pieces of meat,
- fig. 2 shows a similar fully automatic apparatus according to the invention and
- figs. 3a-3f show working phases in a third embodiment of the apparatus according to the invention.

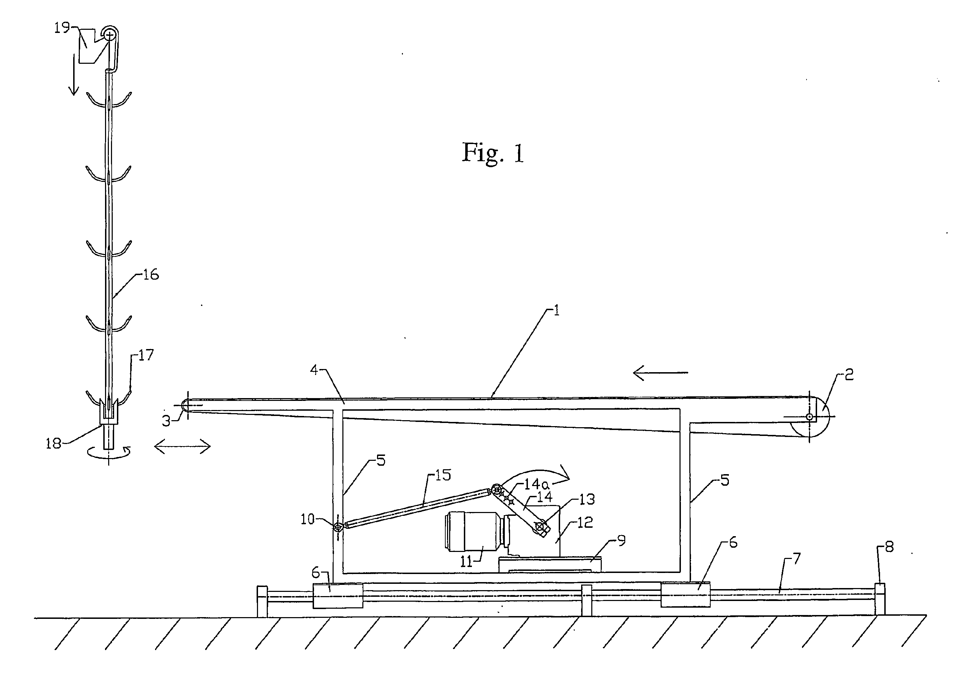

The apparatus in fig. 1 comprises a belt conveyor 1 for the pieces of meat to be suspended. At its upstream end, the conveyor has a drive roller 2 to propel the belt and at the downstream end it has a thin reversing roller 3 to reverse the direction of movement of the belt for return travel. The rollers are fixed in a frame 4. On each side of the belt, two legs 5 are mounted on the frame. At the lower ends of the legs are slide bushes 6. The bushes run on two guide rods 7 that are fixed to a floor stand 8. The stand also supports a console 9 for a drive unit that can act on a crossbar 10 between the two front legs with a horizontal force so that the conveyor is displaced in a horizontal direction to the right or left, depending on the working phase in question.

The drive unit comprises a motor 11 and a gear 12 with a drive shaft 13 perpendicular to the direction of displacement of the conveyor. An arm 14 is mounted on the drive shaft. The arm 14 has a row of holes 14a, by means of which one end of a connection rod 15 can be fixed to the arm in swivel fashion by means of a pin or similar. The other end of the connection rod is hinged to the crossbar 10 between the two front legs 5. When the drive shaft 13 is rotated half a turn from the position in which the arm 14 is in the outermost left position, the conveyor is pulled to a withdrawn position in which the arm 14 is in the outermost right position. When the drive shaft 13 is subsequently rotated half a turn so that the arm 14 resumes the outermost left position, the conveyor is pushed forwards to an advanced position. In the example shown, the conveyor moves 300 mm from the advanced position to the withdrawn position. By fixing the connection rod 15 in another mounting hole 14a in the arm 14, closer to or further from the shaft 13, it is possible to preset the apparatus so that the movement is shorter or longer. In this way, the apparatus can be adapted to handle other types of meat pieces that require a shorter or longer displacement of the conveyor, for example down to 15 cm and up to 60 cm. If the conveyor's front edge must assume a specific position in the conveyor's most advanced position regardless of the setting, the console's mounting plate for the gear 12 can be provided with two or more slots for the screws that fasten the gear to the plate. The motor and the gear can then be displaced and fastened in the position that brings about a specific foremost position of the conveyor's front edge.

The transmission system of the arm 14 and the connection rod 15 used and rotation of the drive shaft 13 at constant speed cause the conveyor 1 to move at sinusoidal speed with gentle acceleration and deceleration. This reduces the risk of the pieces of meat being displaced or rotated on the belt. Preferably, the motor for the belt's drive roller 2 and the motor for the drive shaft 13 are controlled by a control unit by means of sensors that register the movement of the pieces of meat onto and along the conveyor.

If necessary, the motor 11 is stopped for a short time when the conveyor is in the most withdrawn position to wait for the belt to bring the next piece of meat to a position in which it is almost ready for suspension. If the pieces of meat are placed on the belt with the correct distance between them, the motor 11 can, if desired, run continuously during the suspension of the pieces of meat from a Christmas tree.

A Christmas tree 16 is arranged at the downstream end of the conveyor. In fig. 1 the Christmas tree is in the start position, ready to receive a piece of meat on a hook 17. The Christmas tree is fixed at the bottom by a gripper 18 with two slots that are perpendicular to each other. The gripper can be rotated around a vertical axis in steps of a quarter turn. At the top the Christmas tree is held on a sliding bar piece that is inserted in a standard sliding bar system for Christmas trees. The sliding bar piece is fixed to a hoist 19, which is shown in outline in the figure, and which can move the sliding bar piece downwards in steps equivalent to the distance between the hook levels. To compensate for variations in the length of the Christmas trees, there can be a sensor that registers the level of the hooks and ensures that the hoist is finely adjusted. The Christmas tree is placed at a horizontal distance from the end of the conveyor of between 15 and 25 cm.

The pieces of meat that are suspended using the apparatus can, for example, be fore ends, middles, loins, belly or hams from pig carcases. They are supplied to the apparatus preferably in series of the same category in quantities equivalent to the number of hooks on a Christmas tree so that all pieces of meat that are suspended from a Christmas tree belong to the same category, for example the same weight or quality category. The pieces of meat can be sorted into series of the same category by means of an upstream automatic sorting device with a buffer store.

Another option is to use several parallel delivery apparatuses, each of which is designed for a category of meat pieces, whereby the relevant category of meat pieces is supplied to the conveyors from a common conveyor belt.

In the apparatus according to the invention, the pieces of meat are placed on the belt at the upstream end of the conveyor one by one. This can take place manually, but is preferably carried out automatically by means of, for example, a pusher, which pushes a piece of meat from a supply belt onto the belt of the conveyor. The pieces of meat are preferably placed close after each other on the conveyor belt. The supply belt can, for example, be an overhead transverse belt that extends in over the conveyor at its upstream end so that the piece of meat will always fall down onto the conveyor even when the conveyor is in the most advanced position. According to another embodiment, the supply belt and the conveyor are arranged in extension of one another but with the supply belt extending slightly over the upstream end of the conveyor so that the piece of meat always falls down onto the conveyor. The supply belt can slope down towards the conveyor at a very acute angle with a front roller that is close to the conveyor belt and has a small diameter so that the delivery of the pieces of meat can take place as gently as possible. In the two above-mentioned embodiments, the delivery of a piece of meat to the conveyor is preferably controlled so that this takes place during the conveyor's movement forwards.

Gradually a piece of meat on the belt of the conveyor 1 reaches a specific position at the downstream end of the conveyor where it is this piece of meat's turn to be suspended. The conveyor is in the withdrawn position. The motor 11 is operated so that the conveyor is moved forwards to the advanced position at the hook 17 on the Christmas tree 16 that is brought into position at the downstream end of the conveyor. During the conveyor's displacement from the withdrawn position to the advanced position, the conveyor belt is driven so that a significant part of the piece of meat has been moved out over the front edge of the conveyor and extends over the tip of the hook when the conveyor assumes the foremost position. An operator at the suspension location adjusts the position of the piece of meat, if necessary, and presses the piece of meat down onto the hook 17 so that the hook penetrates into the meat deeply enough to ensure that the piece of meat will remain suspended from the hook. The motor 11 continues to rotate the arm 14, which now reverses the direction of displacement of the conveyor so that the conveyor is moved from the advanced position to the withdrawn position. At one point during this process, the piece of meat loses support of the belt as the hook prevents the piece of meat from returning with the conveyor, at which time the free end of the piece of meat falls down and the piece of meat takes a position where it hangs freely from the hook on the Christmas tree.

Subsequently, the gripper 18 causes the Christmas tree to be rotated a quarter turn so that the next hook is brought into the reception position for suspending a new piece of meat from the conveyor after it has reached the advanced position again. This continues until all four hooks on one level have pieces of meat on them. The Christmas tree is then lowered one level by means of the hoist 19 so that one of the next four hooks is brought into the reception position for suspension of a piece of meat. The procedure is then repeated for filling this level, after which the three remaining levels are filled correspondingly. When the Christmas tree is full, it is removed via the sliding bar system and an empty Christmas tree is placed at the end of the conveyor in a position corresponding to that shown in fig. 1.

The tip of the reception hook does not necessarily have to be below the upper run of the belt but can be at or just above the level of the belt, for example 2-10 cm above the belt, in which connection the extending end of the piece of meat has to be lifted correspondingly before it is pressed onto the hook. In some cases, the working rhythm can be improved if the operator carries out this lift before the meat is pressed down onto the hook, especially if he has to adjust the piece of meat on the belt.

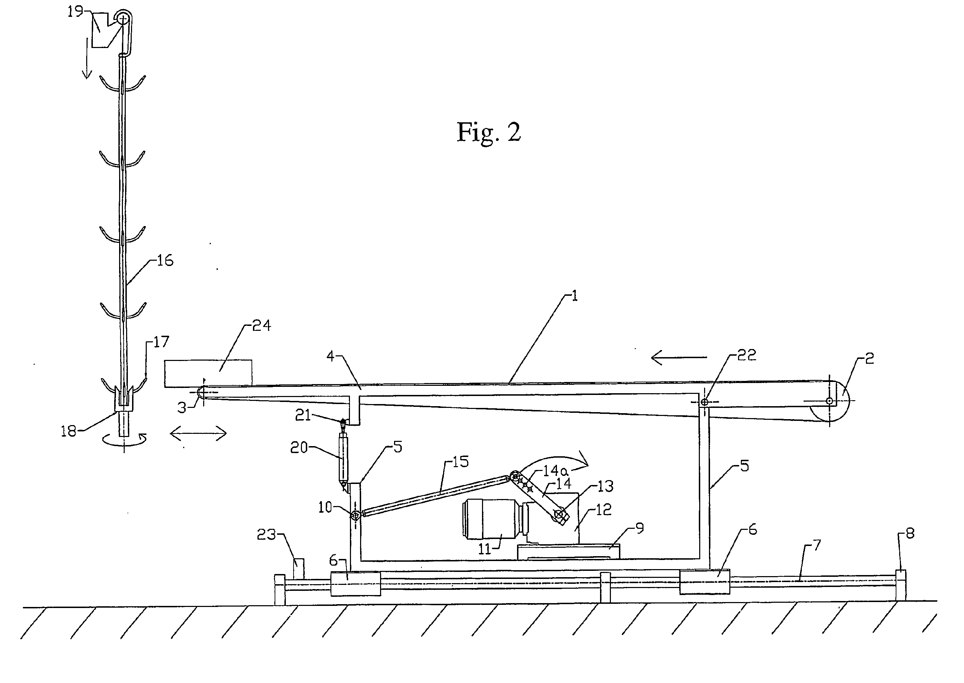

The apparatus in fig. 2 comprises the same parts as the apparatus in fig. 1 but has some design elements that make it suitable for fully automatic operation. The length of the front legs 5 can thus be reduced so that the conveyor's downstream end tips down from the position shown with the end of the hook at a level below the conveyor belt to a level with the end of the hook above the conveyor belt. The reduction is brought about by means of a pneumatic cylinder unit 20, the piston rod of which is fixed to an upper crossbar 21 between the front legs 5 and the housing of which is fixed to the crossbar 10. The frame 4 of the conveyor is hinged to the rear legs, as illustrated by the pin 22. A detector 23 detects when the conveyor is close to the advanced displacement position and activates the pneumatic cylinder unit so that the conveyor's front end is automatically tipped down.

A holding device 24 for the piece of meat that has to be pressed or knocked onto the Christmas tree's reception hook is fixed to the conveyor's frame. In a simple embodiment, the device consists of two vertical guide surfaces for a meat piece that is transported towards the Christmas tree and an overlying grille or similar under which the piece of meat can pass to a position with a significant part of the meat extending out over the front edge of the conveyor. When the conveyor is tipped down, this grille serves as a stop, which presses the meat down onto the tip of a reception hook on the Christmas tree. When the conveyor tips up again, this takes place without the holding device acting on the meat with an upward or backward directed force so that the piece of meat is released from the holding device and will hang down from the hook when the conveyor subsequently returns to the withdrawn position.

In another embodiment, the holding device comprises actively moving parts, which position a piece of meat at the downstream end of the conveyor by a reception hook, so that a significant part of the meat extends out over the front edge of the conveyor, and hold it while the downstream end of the conveyor tips down, at which time the meat is impaled on the hook. The device's grip on the meat is removed before the downstream end of the conveyor is tipped up again. The conveyor is returned to the withdrawn position so that the piece of meat takes a position where it hangs freely from the hook.

Using the apparatuses described, it is possible to suspend around 1200 loins per hour.

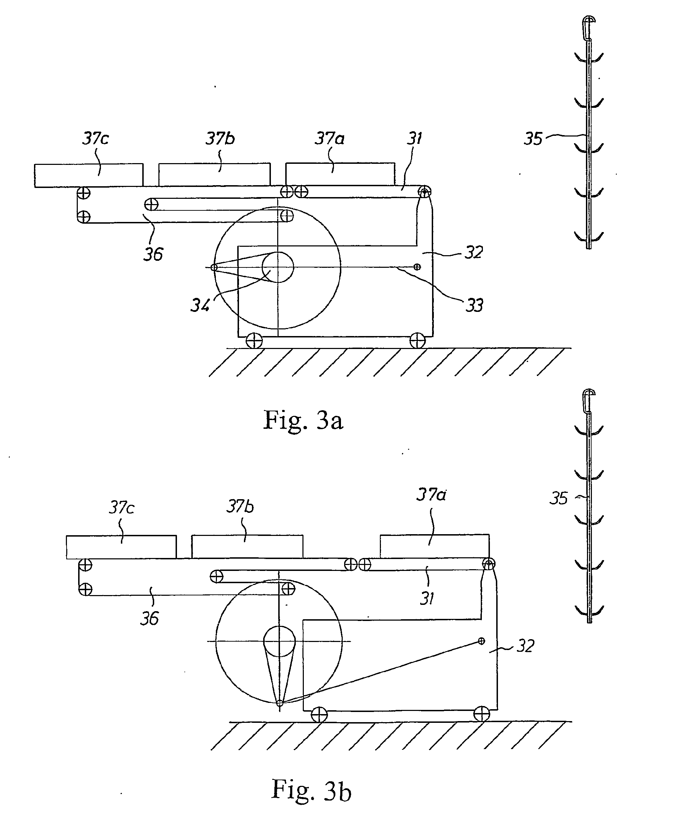

The working principle of the third embodiment of the apparatus according to the invention is outlined in figs. 3a-3f, which show the phases in a working cycle. The apparatus comprises a belt conveyor 31 that is mounted on a displaceable vehicle 32. By means of a connecting rod 33 in a stationary crank system 34, the vehicle can be moved towards and away from a Christmas tree 35, which is brought into position to receive cuts, for example loins, from the conveyor 31. During a working cycle, the crankshaft undergoes 360-degree rotation. Figs. 3a-3f show the situation after 0, 90, 180, 270, 315 and 360 degrees of rotation respectively.

The special feature of this embodiment of the apparatus is that a stationary belt conveyor 36 is mounted at the upstream end of the conveyor 31, which belt conveyor 36 has an upstream roller in a fixed position, while the downstream roller can be displaced in telescopic fashion and is connected to the upstream roller of the conveyor 31 in such a way that it slavishly follows the roller's and the conveyor's movement forwards and backwards in relation to the Christmas tree 35. The belt of the conveyor 36 is kept tight by an underlying tightening roller.

A supply conveyor (not shown) is arranged at the upstream end of the telescopic conveyor 36 to supply cuts to the conveyor 36. The supply conveyor can be arranged across the conveyor 36 and it can be provided with means to push cuts from the belt of the supply conveyor over onto the conveyor 36. However, preferably, a supply conveyor is arranged at the upstream end of the conveyor 36 that is in extension of the telescopic conveyor 36 at its upstream end with the belts of the supply conveyor and the telescopic conveyor 36 lying on the same level in order to provide smooth delivery of pieces of meat from the supply conveyor to the conveyor 36.

The supply conveyor itself can receive pieces of meat from a buffer device in which the pieces of meat are sorted by category so that a number of pieces of meat corresponding to the number of hooks on the Christmas tree are always delivered to the supply conveyor in sequence so that each Christmas tree will carry pieces of meat of the same category.

In the situation shown in fig. 3a, a cut 37a has been transferred almost completely from the telescopic conveyor 36 to the belt conveyor 31 for suspension from the Christmas tree 35. The vehicle 32 is in the furthest position from the Christmas tree. Two cuts 37b and 37c, which are to be suspended subsequently, are transported on the conveyor 36 close to the piece 37a. In fig. 3b, the vehicle is halfway to the Christmas tree and the cuts have been forwarded a distance on the conveyors 31 and 36.

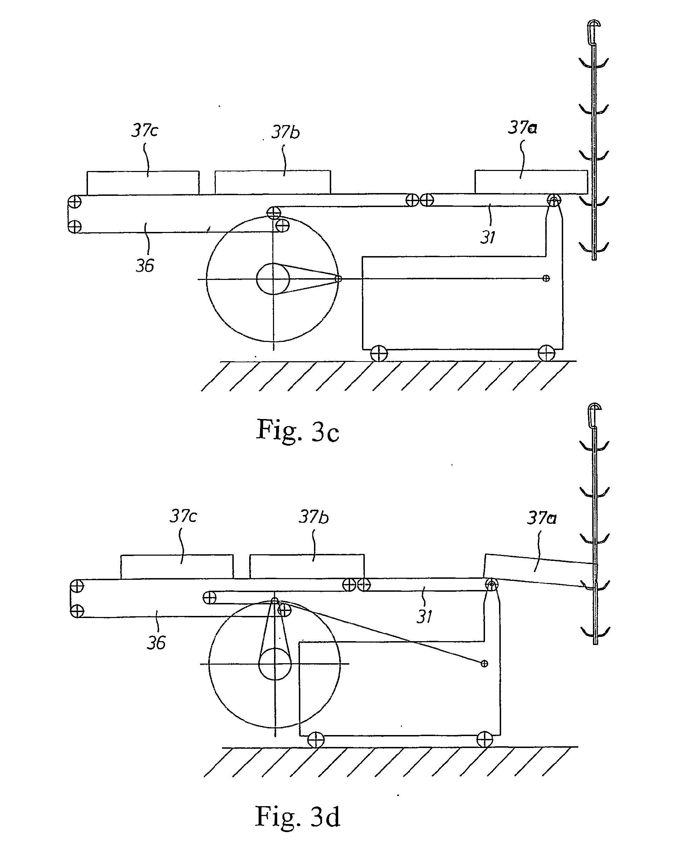

In fig. 3c, the conveyor 31 is in its position closest to the Christmas tree and the cut 37a has been moved a distance out over the downstream end of the conveyor and over a reception hook on the Christmas tree. The conveyor 36 is still conveying the cuts 37b and 37c but as the telescopic roller has followed the conveyor 31, the distance from the cuts to the telescopic roller has been increased. The vehicle now begins to move back towards the starting position. During this process, the cut 37a is knocked onto the reception hook on the Christmas tree (or it can already have been knocked onto the hook before the return travel begins). In fig. 3d, the vehicle is halfway back to the starting position. The foremost of the subsequently conveyed cuts has made contact with the upstream end of the conveyor 31 as it has been conveyed a distance by the conveyor 36 and the telescopic roller has followed the vehicle's return movement.

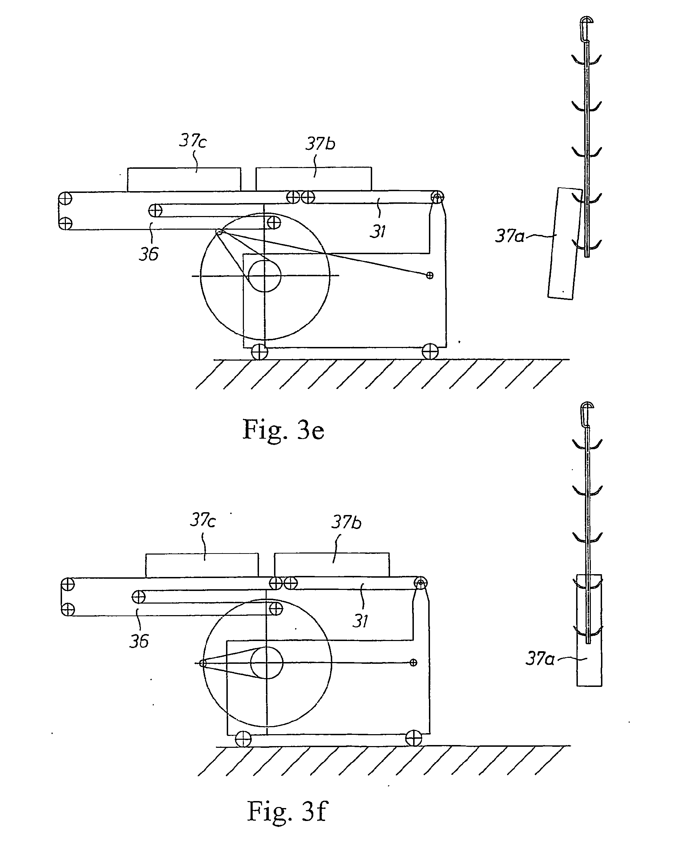

As the vehicle returns further, the cut 37a loses support by the belt of the conveyor 31 and swings down to the position shown in fig. 3e where it is suspended from the hook on the Christmas tree. The conveyors 31 and 36 continue to convey the piece 37b towards the Christmas tree so nearly all of the piece 37b is on the belt of the conveyor 36 in the situation shown in fig. 3f, in which the working cycle is over and the Christmas tree has made a quarter turn so that the hook with the cut 37a is removed and a new hook moves into reception position. The cut 37b now assumes the same position as the cut 37a at the start of the cycle shown in fig. 3a. The same working phases can be repeated for the cut 37b, subsequently for the cut 37c and for the subsequent pieces that are supplied at the upstream end of the conveyor 36. As can be seen, the pieces are close to each other and are ready to undergo a suspension cycle as soon as the previous cycle is over.

The belt of the conveyor 36 is operated at a constant speed, for example 25-40 cm/sec., apart from when the Christmas tree is changed, when there is a short pause, or when the system stops. The belt speed of the supply conveyor is controlled depending on the suspension speed so that the cuts are supplied to the conveyor 36 at a corresponding rate. The belt of the conveyor 31 is operated at variable speed to optimise the phases of the process. In the phase between the situation in fig. 3a and the situation in fig. 3b, the belt is operated at the same speed as the belt in the conveyor 36. The belt speed of the conveyor 31 is subsequently reduced gradually from the situation in fig. 3b to the situation in fig. 3c, where it has become 0, and as the vehicle is virtually at a standstill in this situation, the cut can be pressed or knocked onto the underlying reception hook without problems. Immediately after stopping, the belt is accelerated up following part of a sine curve to a maximum speed that is 3-4 times the speed of the belt in the starting situation in fig. 3a, as the vehicle moves away from the Christmas tree at a similar speed, but in the opposite direction. The maximum speed for the belt and the vehicle is reached in the situation in fig. 3d, after which the speed is reduced so that the belt reaches the starting speed ("working speed") in the situation in fig. 3f (and 3a) and the vehicle comes to a standstill. In this way, there is time to impale the cut on the hook and the subsequent cut is conveyed rapidly forwards on the conveyor 31. There is also less risk of slippage between the belt and the unfixed cuts, which might otherwise be displaced into an incorrect or skew position with problematic hook suspension as a result.

## Claims

1. Apparatus for the delivery of items to a reception area (17) by means of a conveyor (1) with an upstream end for reception of items, a conveyor belt for successive conveyance of the items and a downstream end for delivery of the items, the apparatus comprising a displacement arrangement (5, 6, 7, 8, 11, 12, 14, 15) to displace the conveyor (1) in the direction towards and away from the reception area (17) **characterised in that** the displacement arrangement (5,6, 7, 8, 11, 12, 14, 15) comprises a movable part (5, 6) that carries the conveyor (1), a stationary part (7, 8, 9) with guiding means for the movable part (5, 6) and a drive unit (11, 12, 14, 15) to displace the movable part (5, 6) in relation to the stationary part (7, 8, 9) guided by the guiding means.

2. Apparatus according to claim 1, **characterised in that** the displacement arrangement (5, 6, 7, 8, 11, 12, 14, 15) comprises a crank mechanism to displace the conveyor (1) towards and away from the reception area (17) at a speed that depends on the angular position of the rotating part of the mechanism.

3. Apparatus according to claims 1 or 2, **characterised in that** the drive unit (11, 12, 14, 15) comprises a motor (11; 12) with an arm (14) fixed to the rotating shaft (13) of the motor and a connection piece (15) that is hinged to the arm (14) wherein the motor (11, 12) is mounted stationary and the free end of the connection piece (15) is connected to the displaceable conveyor (1) or wherein the motor (11, 12) and the conveyor (1) are firmly connected to each other and the free end of the connection piece (15) is fixed to the stationary part.

4. Apparatus according to claim 3, **characterised in that** the connection piece (15) can be fixed to the arm (14) at various distances from the rotating shaft (13) and that the limit of the displacement of the conveyor towards the reception area is adjustable, one of the following being adjustable: the position of the motor shaft (13), the length of the connection piece and the fixing point of the connection piece (15) on the free end of the arm (14).

5. Apparatus according to claim 1, **characterised in that**, during operation, the conveyor (1) is displaced at a speed that mainly follows a sine curve from the moment at which the conveyor's front edge is in a rearmost displacement position furthest from the reception area (17) until the edge is in a foremost displacement position closest to the reception area and back to the displacement position furthest from the reception area.

6. Apparatus according to claim 1, **characterised in that** it comprises a control unit to control and vary the speed of the belt in the conveyor (1) and/or the speed of the conveyor (1) in the direction towards and away from the reception area (17).

7. Apparatus according to claim 6, **characterised in that** the control unit comprises a detector to detect an item on the conveyor belt.

8. Apparatus according to claim 1, **characterised in that** a second conveyor is arranged at the upstream end of the first conveyor (1) which second conveyor has a conveyor belt that runs over rollers, of which a downstream roller is linked up with the first conveyor to follow its displacement movement, while an upstream roller of the second conveyor is stationary.

9. Method for delivery of items to a reception area (17) by means of a conveyor (1) according to any of the claims 1-8, **characterised in that** the conveyor (1) is displaced in the direction towards the reception area (17) to a foremost position, that an item conveyed by the conveyer (1) belt is brought partially out over the conveyor's front edge and obtain support on or is held by the reception area (17) and that the conveyor (1) subsequently is displaced away from the reception area (17) to a rearmost position, whereby the item loses the support on the belt and is delivered to the reception area (17).

10. Method according to claim 9, **characterised in that** the displacement of the conveyor towards the reception area and return of the conveyor to the rearmost position is carried out without interruption.

11. Method according to claim 9, **characterised in that** the displacement of the conveyor towards and away from the reception area is carried out by means of a crank mechanism at a speed that depends on the angular position of the rotating part of the mechanism.

12. Method according to claim 9, **characterised in that** the conveyor (1) is displaced at a speed that mainly follows a sine curve from the moment at which the conveyor's front edge is in a rearmost displacement position furthest from the reception area (17) until the edge is in a foremost displacement position closest to the reception area (17) and back to the displacement position furthest from the reception area (17).

13. Method according to claim 9, **characterised in that** the speed of the belt in the conveyor (1) and/or the speed of the conveyor (1) in the direction towards and away from the reception area (17) is controlled and varied.

14. Method according to claim 9, **characterised in that** the items are supplied to the upstream end of the conveyor (1) by means of a second conveyor with a conveyor belt that runs over rollers, of which a downstream roller is linked up with the first conveyor to follow its displacement movement, while an upstream roller of the second conveyor is stationary.

## Patentansprüche

1. Vorrichtung zur Zuführung von Gegenständen an einen Empfangsbereich (17) durch einen Förderer (1) mit einem stromaufwärtigen Ende zum Empfang von Gegenständen, einem Förderband zur sukzessiven Förderung der Gegenstände und einem stromabwärtigen Ende zum Zuführen der Gegenstände, wobei die Vorrichtung eine Verlagerungsanordnung (5, 6, 7, 8, 11, 12, 14, 15) umfasst, um den Förderer (1) in Richtung auf den Empfangsbereich (17) zu und von ihm weg zu verlagern,
**dadurch gekennzeichnet, dass** die Verlagerungsanordnung (5, 6, 7, 8, 11, 12, 14, 15) ein bewegliches Teil (5, 6), das den Förderer (1) trägt, ein stationäres Teil (7, 8, 9) mit Führungsmitteln für das bewegliche Teil (5, 6) und eine Antriebseinheit (11, 12, 14, 15), um das bewegliche Teil (5, 6) im Verhältnis zum stationären Teil (7, 8, 9) geführt von den Führungsmitteln zu verlagern, umfasst.

2. Vorrichtung nach Anspruch 1, **dadurch gekennzeichnet, dass** die Verlagerungsanordnung (5, 6, 7, 8, 11 12, 14, 15) einen Kurbelmechanismus umfasst, um den Förderer (1) mit einer Geschwindigkeit, die von der Winkelposition des rotierenden Teil des Mechanismus abhängt, auf den Empfangsbereich (17) zu und von ihm weg zu verlagern.

3. Vorrichtung nach Anspruch 1 oder 2, **dadurch gekennzeichnet, dass** die Antriebseinheit (11, 12, 14, 15) einen Motor (11, 12) mit einem Arm (14), der an der rotierenden Welle (13) des Motors befestigt ist, und ein Verbindungsstück (15), das schwenkbar an dem Arm (14) angebracht ist, umfasst, wobei der Motor (11, 12) stationär angebracht und das freie Ende des Verbindungsstücks (15) mit dem verlagerbaren Förderer (1) verbunden ist, oder wobei der Motor (11, 12) und der Förderer (1) fest miteinander verbunden sind und das freie Ende des Verbindungsstücks (15) an dem stationären Teil befestigt ist.

4. Vorrichtung nach Anspruch 3, **dadurch gekennzeichnet, dass** das Verbindungsstück (15) in verschiedenen Abständen von der rotierenden Welle (13) an dem Arm (14) befestigbar ist und dass die Grenze der Verlagerung des Förderers auf den Empfangsbereich hin einstellbar ist, wobei einer der folgenden Parameter einstellbar ist: die Position der Motorwelle (13), die Länge des Verbindungsstücks und der Befestigungspunkt des Verbindungsstücks (15) an dem freien Ende des Arms (14).

5. Vorrichtung nach Anspruch 1, **dadurch gekennzeichnet, dass** der Förderer (1) während des Betriebs mit einer Geschwindigkeit, die im Wesentlichen einer Sinuskurve folgt, von dem Moment, zu dem sich der Vorderrand des Förderers in einer hintersten Verlagerungsposition befindet, die von dem Empfangsbereich (17) am weitesten entfernt ist, bis sich der Rand in einer vordersten Verlagerungsposition befindet, die dem Empfangsbereich am nächsten ist, und zurück zur Verlagerungsposition, die am weitesten von dem Empfangsbereich entfernt ist, verlagert wird.

6. Vorrichtung nach Anspruch 1, **dadurch gekennzeichnet, dass** sie eine Steuereinheit umfasst, um die Geschwindigkeit des Bandes in dem Förderer (1) und/oder die Geschwindigkeit des Förderers (1) in Richtung auf den Empfangsbereich (17) zu und von ihm weg zu steuern und zu verändern.

7. Vorrichtung nach Anspruch 6, **dadurch gekennzeichnet, dass** die Steuereinheit einen Detektor zum Erkennen eines Gegenstands auf dem Förderband umfasst.

8. Vorrichtung nach Anspruch 1, **dadurch gekennzeichnet, dass** ein zweiter Förderer an dem stromaufwärtigen Ende des ersten Förderers (1) angeordnet ist, wobei der zweite Förderer ein Förderband aufweist, das über Rollen läuft, von denen eine stromabwärtige Rolle mit dem ersten Förderer verbunden ist, um seiner Verlagerungsbewegung zu folgen, während eine stromaufwärtige Rolle des zweiten Förderers stationär ist.

9. Verfahren zum Zuführen von Gegenständen an einen Empfangsbereich (17) durch einen Förderer (1) nach einem der Ansprüche 1 - 8, **dadurch gekennzeichnet, dass** der Förderer (1) in Richtung auf den Empfangsbereich (17) hin in eine vorderste Position verlagert wird, dass ein von dem Gurt des Förderers (1) geförderter Gegenstand teilweise über den Vorderrand des Förderers hinaus gebracht wird und auf dem Empfangsbereich (17) gestützt oder von ihm gehalten wird und dass der Förderer (1) anschließend weg von dem Empfangsbereich (17) in eine hinterste Position verlagert wird, wodurch der Gegenstand die Stütze auf dem Gurt verliert und dem Empfangsbereich (17) zugeführt wird.

10. Verfahren nach Anspruch 9, **dadurch gekennzeichnet, dass** die Verlagerung des Förderers auf den Empfangsbereich zu und die Rückkehr des Förderers in die hinterste Position ohne Unterbrechung ausgeführt wird.

11. Verfahren nach Anspruch 9, **dadurch gekennzeichnet, dass** die Verlagerung des Förderers auf den Empfangsbereich zu und von ihm weg mittels eines Kurbelmechanismus mit einer Geschwindigkeit ausgeführt wird, die von der Winkelposition des rotierenden Teils des Mechanismus abhängt.

12. Verfahren nach Anspruch 9, **dadurch gekennzeichnet, dass** der Förderer (1) mit einer Geschwindigkeit, die im Wesentlichen einer Sinuskurve folgt, von dem Moment an, zu dem sich der Vorderrand des Förderers in einer hintersten Verlagerungsposition befindet, die von dem Empfangsbereich (17) am weitesten entfernt ist, bis der Rand sich in einer vordersten Verlagerungsposition befindet, die dem Empfangsbereich am nächsten ist, und zurück zur Verlagerungsposition, die am weitesten von dem Empfangsbereich (17) entfernt ist, verlagert wird.

13. Verfahren nach Anspruch 9, **dadurch gekennzeichnet, dass** die Geschwindigkeit des Bandes in dem Förderer (1) und/oder die Geschwindigkeit des Förderers (1) in Richtung auf den Empfangsbereich (17) zu und von ihm weg gesteuert und verändert wird.

14. Verfahren nach Anspruch 9, **dadurch gekennzeichnet, dass** die Gegenstände dem stromaufwärtigen Ende des Förderers (1) mittels eines zweiten Förderers zugeführt werden, der ein Förderband aufweist, das über Rollen läuft, von denen eine stromabwärtige Rolle mit dem ersten Förderer verbunden ist, um seiner Verlagerungsbewegung zu folgen, während eine stromaufwärtige Rolle des zweiten Förderers stationär ist.

## Revendications

1. Appareil pour la distribution d'articles à une zone de réception (17) au moyen d'un transporteur (1) ayant une extrémité amont pour recevoir les articles, une courroie de transport pour transporter successivement les articles et une extrémité aval pour distribuer les articles, l'appareil comprenant un dispositif de déplacement (5, 6, 7, 8, 11, 12, 14, 15) destiné à déplacer le transporteur (1) pour l'approcher et l'éloigner de la zone de réception (17), **caractérisé en ce que** le dispositif de déplacement (5, 6, 7, 8, 11, 12, 14, 15) comprend une partie mobile (5, 6) qui transporte le transporteur (1), une partie stationnaire (7, 8, 9) munie de moyens de guidage destinés à la partie mobile (5, 6) et un organe d'entraînement (11, 12, 14, 15) destiné à déplacer la partie mobile (5, 6) guidée par les moyens de guidage par rapport à la partie stationnaire (7, 8, 9).

2. Appareil selon la revendication 1, **caractérisé en ce que** le dispositif de déplacement (5, 6, 7, 8, 11, 12, 14, 15) comprend un mécanisme à bielle destiné à déplacer le transporteur (1) pour l'approcher et l'éloigner de la zone de réception (17) à une vitesse qui est fonction de la position angulaire de la partie rotative du mécanisme.

3. Appareil selon les revendications 1 ou 2, **caractérisé en ce que** l'organe d'entraînement (11, 12, 14, 15) comprend un moteur (11 ; 12) avec un bras (14) fixé à un arbre rotatif (13) du moteur et une pièce de liaison (15) qui est articulée au bras (14), dans lequel le moteur (11, 12) est monté en étant stationnaire et l'extrémité libre de la pièce de liaison (15) est reliée au transporteur mobile (1) ou dans lequel le moteur (11, 12) et le transporteur (1) sont solidement reliés l'un à l'autre et où l'extrémité libre de la pièce de liaison (15) est fixée à la partie stationnaire.

4. Appareil selon la revendication 3, **caractérisé en ce que** la pièce de liaison (15) peut être fixée au bras (14) à différentes distances de l'arbre rotatif (13) et **en ce que** la limite de déplacement du transporteur vers la zone de réception est ajustable, un des paramètres suivants pouvant être ajusté : la position de l'arbre du moteur (13), la longueur de la pièce de liaison, et le point de fixation de la pièce de liaison (15) à l'extrémité libre du bras (14).

5. Appareil selon la revendication 1, **caractérisé en ce que** pendant le fonctionnement, le transporteur (1) se déplace à une vitesse qui suit principalement une courbe sinusoïdale depuis l'instant où le bord avant du transporteur est à une position de déplacement arrière qui est la plus éloignée de la zone de réception (17) jusqu'à l'instant où il est dans une position de déplacement avant qui est la plus proche de la zone de réception, pour ensuite revenir à la position de déplacement qui est la plus éloignée de la zone de réception.

6. Appareil selon la revendication 1, **caractérisé en ce qu'**il comprend un organe de commande permettant de commander et de faire varier la vitesse de la courroie du transporteur (1) et/ou la vitesse du transporteur (1) lorsqu'il s'approche et s'éloigne de la zone de réception (17).

7. Appareil selon la revendication 6, **caractérisé en ce que** l'organe de commande comprend un détecteur destiné à détecter un article sur la courroie de transport.

8. Appareil selon la revendication 1, **caractérisé en ce qu'**un deuxième transporteur est disposé à l'extrémité amont du premier transporteur (1), lequel deuxième transporteur possède une courroie de transport qui passe au dessus de rouleaux, parmi lesquels un rouleau aval est relié au premier transporteur pour suivre le mouvement de son déplacement, un rouleau amont du deuxième transporteur étant stationnaire.

9. Procédé pour distribuer des articles à une zone de réception (17) au moyen d'un transporteur (1) selon l'une quelconque des revendications 1 à 8, **caractérisé en ce que** le transporteur (1) se déplace en direction de la zone de réception (17) jusqu'à une position avant, un article transporté par la courroie du transporteur (1) est amené partiellement hors de la courroie et au dessus du bord avant du transporteur pour être supporté ou maintenu par la zone de réception (17) et le transporteur (1) s'éloigne ensuite de la zone de réception (17) jusqu'à une position la plus en arrière, l'article n'étant alors plus supporté par la courroie et étant distribué à la zone de réception (17).

10. Procédé selon la revendication 9, **caractérisé en ce que** le déplacement du transporteur vers la zone de réception et le retour du transporteur à la position la plus en arrière s'effectuent sans interruption.

11. Procédé selon la revendication 9, **caractérisé en ce que** le déplacement du transporteur pour s'approcher et s'éloigner de la zone de réception est effectué au moyen d'un mécanisme à bielle à une vitesse qui est fonction de la position angulaire de la partie rotative du mécanisme.

12. Procédé selon la revendication 9, **caractérisé en ce que** le transporteur (1) se déplace à une vitesse qui suit principalement une courbe sinusoïdale depuis l'instant où le bord avant du transporteur est à une position de déplacement le plus arrière qui est la plus éloignée de la zone de réception (17) jusqu'à l'instant où il est dans une position de déplacement le plus avant qui est la plus proche de la zone de réception (17), pour ensuite revenir à la position de déplacement qui est la plus éloignée de la zone de réception (17).

13. Procédé selon la revendication 9, **caractérisé en ce que** l'on commande et fait varier la vitesse de la courroie du transporteur (1) et/ou la vitesse du transporteur (1) lorsqu'il s'approche et s'éloigne de la zone de réception (17).

14. Procédé selon la revendication 9, **caractérisé en ce que** les articles sont fournis à l'extrémité amont du transporteur (1) au moyen d'un deuxième transporteur possédant une courroie de transport qui passe au dessus de rouleaux, parmi lesquels un rouleau aval est relié au premier transporteur pour suivre le mouvement de son déplacement, un rouleau amont du deuxième transporteur étant stationnaire.
